# EUROPEAN PATENT APPLICATION

(11) **EP 2 418 564 A2**
(43) Date of publication of application: **15.02.2012**
(21) Application number: 11176912.1
(22) Date of filing: 09.08.2011
(51) Int. Cl.: G06F 3/02, B41J 3/407, G06F 9/44

(54) **Electronic apparatus and method of controlling the electronic apparatus**

(30) Priority: 10.08.2010 JP 2010179388
(71) Applicant: Seiko Epson Corporation, Tokyo 163-0811 (JP)
(72) Inventor: Kurashina, Hiroyasu, Suwa-shi, Nagano 392-8502 (JP)
(74) Representative: MERH-IP Matias Erny Reichl Hoffmann

(57) **Abstract**

There is provided an electronic apparatus 1 including a display unit 5 that displays a system language switching screen 72 for selecting and switching a system language from a plurality of options and a display control unit 40 that carries out display control of the display unit 5, and a selection manipulation unit 12, 13 that selects an arbitrary option from a plurality of options, the display control unit 40 performs control such that a switching message screen 73 for notifying the fact that the system language is switched is displayed on the display unit 5 after manipulation is made to select an arbitrary option using the selection manipulation unit 12, 13, and the switching message screen 73 displays a language name of the system language represented using the system language corresponding to a selected arbitrary option and a language name of the system language represented using a predetermined language.

## Description

### BACKGROUND

### 1. Technical Field

The present invention relates to an electronic apparatus capable of switching a system language into a plurality of types of languages and a method of controlling the electronic apparatus.

### 2. Related Art

In the related art, in a case where the system language is switched in this type of electronic apparatus, each menu is generally displayed using the system language of after switching (refer to "Dymo RHIN06000 User Guide Page. 8 (2007 Sanford, L.P. All Rights Reserved. 09/07)" and "Brother P-touch7600 User's Guide Page 12 http://www.brother-usa.com/PTouch/modeldetail.aspx? ProductlD=PT7600"). However, in such an electronic apparatus, the language for the menu notation itself is also switched when the switching of the original system language is carried out. Therefore, if a user erroneously switches the system language to a language unfamiliar to the user, or a third party switches the system language to an unfamiliar language, a user may not be able to recognize each menu by himself/herself. Therefore, it is impossible to carry out manipulation for returning to the original system language or switching to a familiar language.

For this reason, there has been proposed an electronic apparatus in which, after switching the system language, an indication (message) regarding the switching manipulation of the system language is displayed using the system language after the switching and a predetermined language established in advance (refer to JP-A-2006-293585). In this electronic apparatus, even if the system language is erroneously switched to an unfamiliar language, it is possible to switch the system language by referencing an indication regarding the switching operation of the system language displayed using a predetermined language.

However, in the aforementioned electronic apparatus, the notation of the option is represented using a system language corresponding to that option even if a user can find the switching manipulation screen of the system language by displaying an indication regarding the switching manipulation of the system language using a predetermined language. Therefore, a user may erroneously switch the setup language.

### SUMMARY

An advantage of some aspects of the invention is to provide an electronic apparatus and a method of controlling the electronic apparatus capable of correctly carrying out the system language switching manipulation.

An aspect of the invention is directed to an electronic apparatus including: a display unit that displays a system language switching screen for selecting and switching a system language from a plurality of options; a display control unit that carries out display control of the display unit; and a selection manipulation unit that selects an arbitrary option of a plurality of the options, wherein the display control unit performs control such that a switching message screen for notifying the fact that the system language is switched is displayed on the display unit after manipulation is made to select an arbitrary option using the selection manipulation unit, and the switching message screen displays a language name of the system language represented using a system language corresponding to the arbitrary option and a language name of the system language represented using a predetermined system language. In particular, there is proposed an electronic apparatus comprising a display unit configured to display a system language switching screen for selecting a system language of the electronic apparatus from a plurality of options displayed on the system language switching screen and switching the system language; a display control unit configured to carry out display control of the display unit; and a selection manipulation unit configured for selecting an arbitrary option from a plurality of the options displayed by the display unit, wherein the display control unit performs control of the display unit such that a switching message screen for notifying a fact that the system language is switched is displayed on the display unit after manipulation is made to select an arbitrary option using the selection manipulation unit, and wherein the switching message screen displays a language name of the system language represented using a system language corresponding to the selected arbitrary option and a language name of the system language represented using a predetermined system language.

Another aspect of the invention is directed to a method of controlling an electronic apparatus including a display unit that displays a system language switching screen for selecting a system language from a plurality of options and switching the system language and a selection manipulation unit that selects an arbitrary option from a plurality of the options. The method includes: allowing the electronic apparatus to display a language name of the system language represented using a system language corresponding to the arbitrary option and a language name of the system language represented using a predetermined language after manipulation is made to select an arbitrary option using the selection manipulation unit; and allowing the electronic apparatus to display on the display unit a switching message screen notifying the fact that the system language is switched. In particular, there is proposed a method for controlling an electronic apparatus comprising a display unit configured to display a system language switching screen for selecting a system language of the electronic apparatus from a plurality of options displayed on the system language switching screen and switching the system language and a selection manipulation unit for selecting an arbitrary option from a plurality of the options displayed by the display unit, the method comprising: controlling the electronic apparatus so as to display a language name of the system language represented using a system language corresponding to the selected arbitrary option and a language name of the system language represented using a predetermined language after manipulation is made to select an arbitrary option using the selection manipulation unit; and controlling the electronic apparatus so as to display on the display unit a switching message screen notifying the fact that the system language is switched.

With such configurations, after manipulation is made to select the system language, the language name of the selected language is displayed using the selected language and a predetermined language. Therefore, a user can recognize what language is selected by himself/herself. That is, if a predetermined language is set to a language familiar to the user, the language name of the selected language can be represented using the predetermined language even when an unfamiliar language is selected erroneously. Accordingly, the user can understand what language is selected. Therefore, it is possible to reduce the possibility of re-selecting a language already selected once erroneously.

In this case, it is preferable that the display control unit temporarily displays the switching message screen after manipulation is made to select an arbitrary option using the selection manipulation unit.

With this configuration, the manipulation for removing the switching message screen becomes unnecessary, and since a consideration for the system language of the screen for guiding the manipulation for removal is also unnecessary, manipulation is not cumbersome.

In addition, it is preferable that the display control unit perform control such that each option is displayed using language names represented using the system languages corresponding to each option displayed on the system language switching screen and the language names represented using a predetermined language when the system language switching screen is displayed.

With this configuration, if at least the predetermined language is a language familiar to a user, it is possible to recognize what kind of language the corresponding language name is by the language name represented using a predetermined language even when an unfamiliar language name is selected by a user in the event that a user selects the desired option from a plurality of options.

In such cases, it is preferable that the electronic apparatus further include a predetermined language switching manipulation unit that switches the system language from a current setup language (currently set system language) to the predetermined language by pressing a manipulation key corresponding to a predetermined language, wherein the display control unit performs control such that a query message screen for querying whether or not the system language is switched to the predetermined language shall be displayed on the display unit after manipulation of the predetermined language switching manipulation unit, and the query message screen displays a query message represented using at least the setup language (currently set system language).

In this configuration, it is possible to readily and reliably switch to a predetermined language by pressing a predetermined manipulation key corresponding to a predetermined language. If the predetermined language is at least recognizable by a user, it is convenient particularly when a user erroneously switches to an unfamiliar language.

In this case, the query message screen preferably displays a query message represented using the current setup language (currently set system language) and a query message represented using a predetermined language.

With such configurations, since a user is reliably notified of a query regarding whether or not the system language is switched to a predetermined language, it is possible to prevent erroneous manipulation by pressing a predetermined manipulation key corresponding to a predetermined language.

### BRIEF DESCRIPTION OF THE DRAWINGS

The invention will be described with reference to the accompanying drawings, wherein like numbers reference like elements.

Fig. 1 is an exterior perspective view illustrating a tape print apparatus according to an embodiment of the invention with the cover opened.

Fig. 2 is a control block diagram illustrating a tape print apparatus.

Fig. 3 is a transition diagram illustrating a display screen for switching the system language.

Fig. 4 is a list of options corresponding to each language displayed on a system language switching screen.

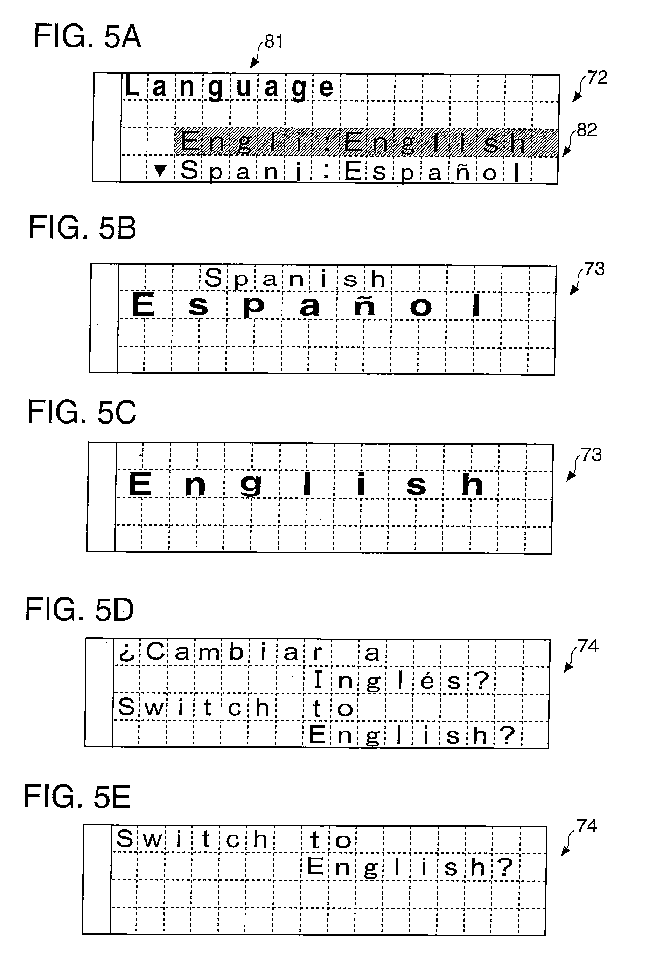

Figs. 5A to Fig. 5E illustrate examples of each screen for switching the system language, in which Fig. 5A is a diagram illustrating a system language switching screen when the setup language is "English," Fig. 5B is a diagram illustrating a switching message screen when the system language switching screen of Fig. 5A is manipulated to switch the system language to "Spanish," Fig. 5C is a diagram illustrating a system language switching screen when the system language switching screen of Fig. 5A is manipulated to switch the system language to "English," Fig. 5D is a diagram illustrating a query message screen when manipulation is made to switch the system language from "Spanish" to "Standard Language (English)," and Fig. 5E is a diagram illustrating a query message screen when manipulation is made to switch the system language from "English" to "Standard Language (English)."

Fig. 6 is a flowchart illustrating a system language switching process.

Fig. 7 is a flowchart illustrating a standard language returning process.

### DESCRIPTION OF EXEMPLARY EMBODIMENTS

Hereinafter, an exemplary embodiment of the present invention will be described with reference to the accompanying drawings. In the present embodiment, a tape print apparatus is exemplarily described as an electronic apparatus, in which a label is created by printing a tape-form member. The tape print apparatus has a function of switching the system language displayed on a display screen to a desired language by a user's manipulation. In the following description, the language set by a user as a system language is called the "setup language", and the language set in advance before shipment is called the "standard language" (predetermined language). That is, the "setup language" can be variable, but the "standard language" is not variable. According to the present embodiment, "English" is exemplarily set as the standard language, and the same language as the characters or the function menus printed on a mainframe of the tape print apparatus is set as the standard language. This is because at least the language printed on a mainframe of the tape print apparatus can be understood by a user, and thus, there would be no problem if it is set as the standard language.

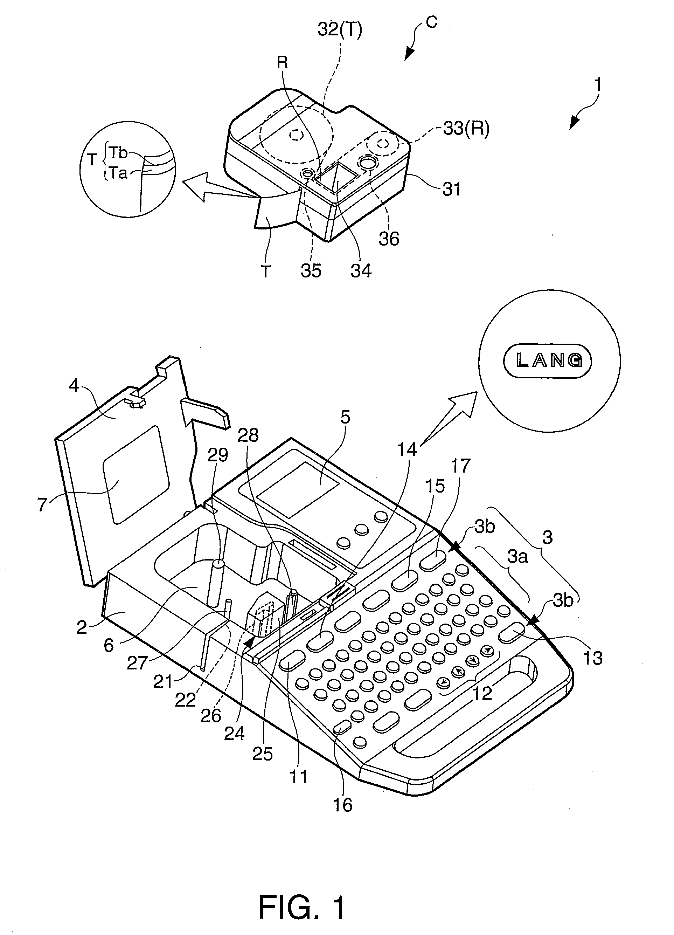

Fig. 1 is an exterior perspective view illustrating a state in which the openable cover 4 of the tape print apparatus 1 is opened according to the present embodiment. Referring to Fig. 1, the tape print apparatus 1 includes an exterior formed by the device casing 2, a keyboard 3 arranged on the front top face of the device casing 2 with various entry keys, an openable cover 4 installed in the left side on the rear top face, and a display screen 5 (display unit) arranged to the right side on the rear top face. In the inner side of the openable cover 4, a cartridge receiving portion 6 (e.g a cartridge receptacle) is hollowly formed to install the tape cartridge C, and the tape cartridge C can be detachably installed in the cartridge receiving portion 6 while the openable cover 4 is opened. In addition, the openable cover 4 is provided with an inspection hole 7 for recognizing an installation/removal state of the tape cartridge C while the openable cover 4 is closed.

In the keyboard 3, a character key group 3a, and a functional key group 3b for specifying various operational modes are arranged. The character key group 3a has a full-key configuration based on a JIS arrangement and also has a shift key 16 for suppressing the increasing number of manipulated keys as in a general word-processor and the like. The functional key group 3b includes a [Print] key 11, a cursor key 12, a [Selection] key 13, a [Language] key 14, a [Configuration setup] key 15, a [Delete] key 17, and the like.

The [Print] key 11 can be used for instructing to carry out printing. The cursor key 12 includes up, down, left, and right movement keys [↑], [↓],[←], and [→] and can be used to manipulate cursor movement and/or scrolling. The [Selection] key 13 can be used to select an option displayed on the display screen 5 and/or to confirm the selected option. The [Delete] key 17 can be used to delete and/or cancel input information. A user may select a corresponding option by manipulating the cursor key 12 to move the cursor to a desired option and pressing the [Selection] key 13 (selection manipulation), for example. In addition, the "selection manipulation unit" according to the above-described aspects includes the cursor key 12 and the [Selection] key 13.

The [Language] key 14 can be used to switch a system language for various kinds of information (messages) displayed on the display screen 5 into other languages. For example, the [Language] key 14 can be used to select a system language for various kinds of information (messages) displayed on the display screen 5 from a plurality of available languages and thereby set the system language. The [configuration setup] key 15 can be used to carry out various kinds of configuration setup of the tape print apparatus 1. In this manner, according to the present embodiment, since the [Language] key 14 is independently provided from the [configuration setup] key 15, it is advantageously possible to readily switch the system language. In addition, on the top face of the [Language] key 14, characters "LANG" representing the system language switching function are inscribed, for example. That is, the [Language] key 14 for switching the system language itself represents a functional content using the set standard language (e.g. English). As a result, a user can be informed of the fact that the system language can be switched by pressing the [Language] key 14 regardless of the system language of the display screen 5 (i.e. regardless of the system language that is set for various kinds of information (messages) displayed on the display screen 5).

In addition, according to the present embodiment, the user's setup language set as the system language can be switched to the standard language (e.g. English in the present embodiment) by simultaneously pressing the shift key 16 and the [Language] key 14. In addition, a "predetermined language switching manipulation unit" described in the above-described aspects refers to the shift key 16 and the [Language] key 14. The system language switching manipulation and process will be described in detail below.

The display screen 5 according to this exemplary embodiment is formed using a liquid crystal display. The display screen 5 can be used by a user to enter desired texts or images through the keyboard 3 and create and/or edit the print data such as text data or image data and/or recognize(confirm) the result thereof. In addition, each screen including various messages or options is displayed when the system language switching or various kinds of configuration setup is carried out (refer to Figs. 5A to 5E).

To the left side of the device casing 2, a tape discharge hole 21 communicating the cartridge receiving portion 6 to an external side is formed, and the tape discharge hole 21 is provided with a tape cutter 22 for cutting out the discharged print tape T. In addition, a reed-shaped label is created by releasing the print-completed print tape T from the tape discharge hole 21 in a predetermined length and cutting out the print-completed print tape T using the tape cutter 22 while the releasing is halted.

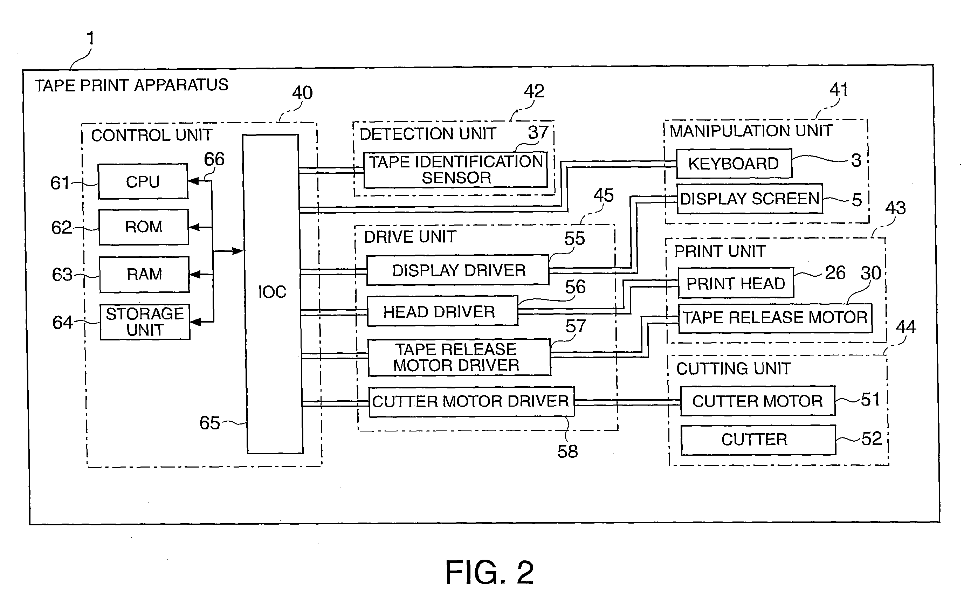

Meanwhile, the cartridge receiving portion 6 is provided with a head unit 24 having a thermal-type print head 26 internally provided within the head cover 25, a platen drive axis 27 facing the print head 26, a rolling drive axis 28 for rolling the ink ribbon R described below, and a positioning projection 29 for the tape reel 32 described below. In addition, under the cartridge receiving portion 6, a tape release motor 30 (refer to Fig. 2) for rotating the platen drive axis 27 and the rolling drive axis 28 is internally provided.

The tape cartridge C is configured by receiving a tape reel 32 obtained by winding the print tape T having a constant width (approximately 4 to 48 mm) in the top center portion inside the cartridge casing 31 and the ribbon reel 33 obtained by winding the ink ribbon R in the lower right portion, and the print tape T and the ink ribbon R have the same width. In addition, a through hole 34 for inserting the head unit 24 is formed in the left lower portion of the tape reel 32. Furthermore, a platen roller 35 fitted into the platen drive axis 27 and rotatably driven is provided in a position opposite to the print head 26 internally provided in the head unit 24 by interposing a portion where the print tape T and the ink ribbon R are overlapped while the head unit 24 is inserted into the through hole 34. Meanwhile, a ribbon winding reel 36 is disposed adjacent to the ribbon reel 33, and the ink ribbon R successively released from the ribbon reel 33 is arranged to travel around the head cover 25 and wound around the ribbon winding reel 36.

As the tape cartridge C is installed in the cartridge receiving portion 6, the through hole 34, the center hole of the tape reel 32, and the center hole of the ribbon winding reel 36 are inserted into the head cover 25, the positioning projection 29, and the rolling drive axis 28, respectively, and the print head 26 abuts on the platen roller 35 by interposing the print tape T and the ink ribbon R so that printing is possible. Then, when a user enters a desired text or image using the keyboard 3 and instructs printing while the user confirms the editing result of the display screen 5, the tape print apparatus 1 carries out the desired printing on the print tape T by successively releasing the print tape T from the tape cartridge C using the tape release motor 30 and selectively heating the heating element of the print head 26. As the print-completed portion of the print tape T is released from the tape discharge hole 21 as needed, and when the print is terminated, the tape release motor 30 releases the print tap T up to the position of a tape length including a margin and stops the releasing (then, the process advances to the cut-out process).

Meanwhile, the print tape T includes a recording tape Ta having an adhesive layer on the rear surface and a peel-off tape Tb attached to the recording tape Ta using the adhesive layer. In addition, the print tape T is wound in a roll shape by disposing the recording tape Ta outside and the peel-off tape Tb inside and stored in the cartridge casing 31. In addition, a plurality of types of print tapes T is prepared (depending on the tape width, the tape background color, the pattern, the material (texture), and the like), and one type of the print tapes T and the ink ribbon R are stored in each cartridge casing 31. In addition, a plurality of holes (not shown) for specifying the type of the tape cartridge C is provided on the rear surface of the cartridge casing 31. In addition, a plurality of tape identification sensors (micro-switch or the like) 37 is provided in the cartridge receiving portion 6 to match with a plurality of holes to detect them (refer to Fig. 2). The type of tape can be determined by detecting the states of a plurality of holes using the tape identification sensors 37.

Next, a control configuration of the tape print apparatus 1 will be described with reference to the control block diagram of Fig. 2. The tape print apparatus 1 includes a manipulation unit 41, a detection unit 42, a print unit 43, a cutting unit 44, a drive unit 45, and a control unit 40 (display control unit) connected to each of the units to control the overall tape print apparatus 1.

The manipulation unit 41 serves as a user interface for inputting, editing, and/or setting information from the character key group 3a or the functional key group 3b on the keyboard 3, displaying such various kinds of information on the display screen 5, and the like.

The detection unit 42 has the tape identification sensor 37 described above and detects the type of print tape T (tape cartridge C). The print unit 43 has the print head 26 and the tape release motor 30 and carries out printing based on the created print data on the print tape T while transferring the print tape T and the ink ribbon R.

The cutting unit 44 has a cutter 52 for cutting out the recording tape Ta and the peel-off tape Tb of the print tape T and a cutter motor 51 for driving them. In addition, using the cutter 52, the print tape T for which the print process is print-completed in the print unit 43 is cut out in a predetermined length to create a label. The drive unit 45 has a display driver 55, a head driver 56, a tape release motor driver 57, and a cutter motor driver 58 to drive each unit.

The control unit 40 includes a CPU (Central Processing Unit) 61, a ROM (Read Only Memory) 62, a RAM (Random Access Memory) 63, a storage unit 64, and an input/output control device (hereinafter, referred to as an "IOC:Input Output Controller") 65, and they are connected to each other through an internal bus 66. The RAM 63 can be used as a work area for executing various processes by the CPU 61.

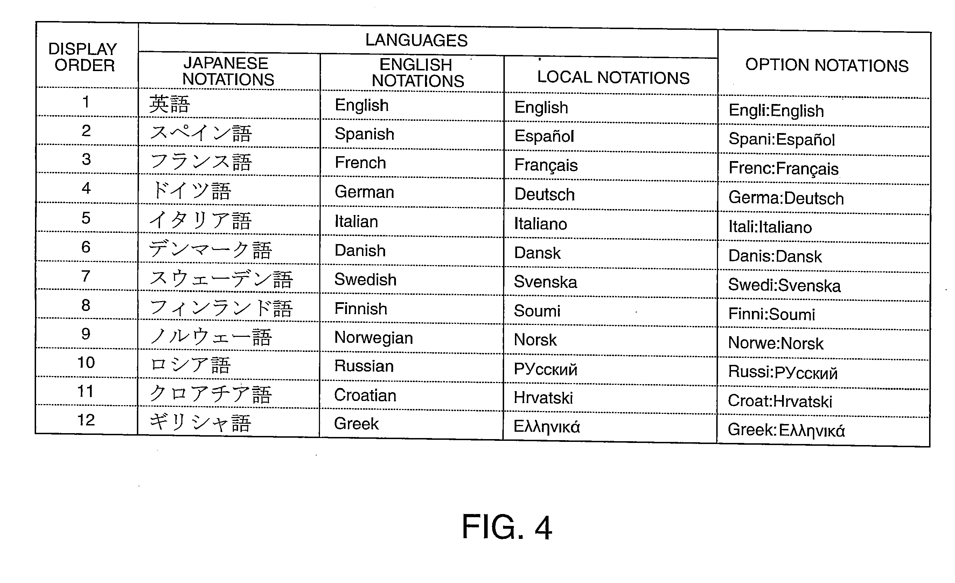

The ROM 62 is adapted to store a control program and control data for carrying out various controls by the CPU 61. Specifically, the control program includes a program for carrying out a system language switching process for switching the setup language set as a current system language to other languages and a standard language returning process for switching the setup language set as a current system language into the standard language. In addition, the storage unit 64 can store various kinds of information corresponding to each language for display on the display screen 5. Specifically, the storage unit 64 stores various messages corresponding to each language for display on a normal edit screen 71, a switching message screen 73, a query message screen 74, and various configuration setup screens, options corresponding to each language for display on the system language switching screen 72, and the like (refer to Figs. 4 and 5). In the present embodiment, the language setting switching process is initiated by pressing the [Language] key 14, and the standard language returning process is initiated by pressing the shift key 16 and the [Language] key 14.

By means of the aforementioned configuration, the CPU 61 inputs various signals/data from each unit of the tape print apparatus 1 through the IOC 65 according to various control programs within the ROM 62. In addition, various process controls are carried out by processing various kinds of data within the RAM 63 based on various input signals and data, and outputting various signals and data to each unit of the tape print apparatus 1 through the IOC 65.

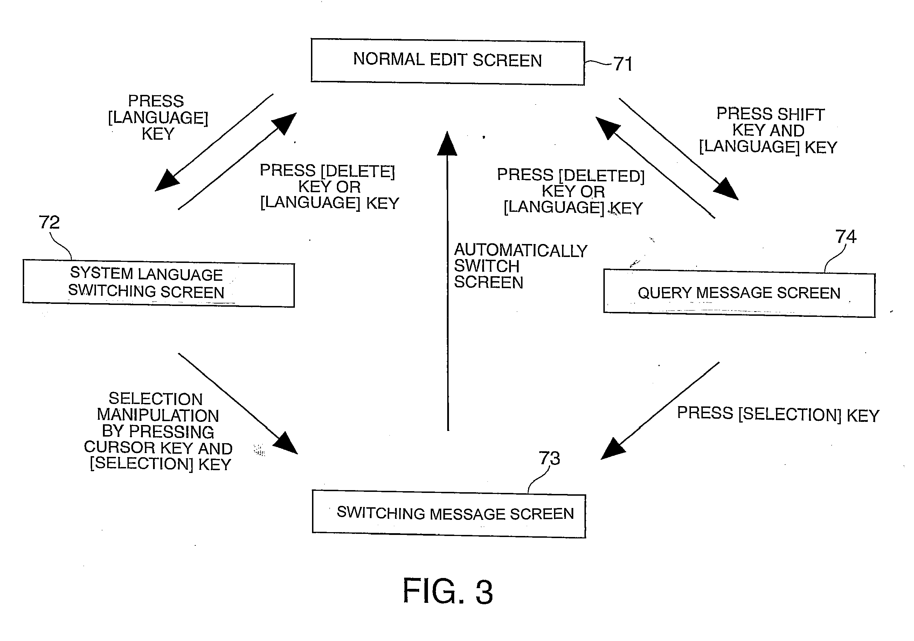

Next, a transition of the screen displayed on the display screen 5 during the system language switching will be described with reference to Fig. 3. As shown in Fig. 3, if the [Language] key 14 is pressed when the normal edit screen 71 is displayed on the display screen, the system language switching screen 72 is displayed on the display screen 5. The system language switching screen 72 is a manipulation screen for selecting the system language by a user and displays the system language options (refer to Fig. 5A). Then, as an arbitrary option is selected by pressing the cursor key 12 and the [Selection] key 13 from the options displayed on the system language switching screen 72, a switching message screen 73 for notifying the fact that the system language is switched is displayed. In addition, after the switching message screen 73 is temporarily displayed (in the present embodiment, for 0.75 seconds), a normal edit screen 71 in which the system language is switched to the selected language is displayed automatically (without any user's manipulation). In addition, if the [Delete] key 17 or the [Language] key 14 is pressed when the system language switching screen 72 is displayed on the display screen 5, the normal edit screen 71 is displayed again.

Meanwhile, if the shift key 16 and the [Language] key 14 are pressed while the normal edit screen 71 is displayed on the display screen 5, a query message screen 74 for querying whether or not a user agrees to switch the system language to the standard language is displayed. Then, if the [Selection] key 13 is pressed, the switching message screen 73 is temporarily displayed (in the present embodiment, for 0.75 seconds), and the normal edit screen 71 in which the system language is switched to the standard language (English) is automatically displayed. In addition, if the [Delete] key 17 or the [Language] key 14 is pressed while the query message screen 74 is displayed on the display screen 5, the normal edit screen 71 is displayed again.

Here, options corresponding to each language stored in the storage unit 64 will be described with reference to Fig. 4. Fig. 4 illustrates a list of all options as well as an option structure. In this list, the display order of each language, Japanese notations, standard language (English) notations, local notations, and option notations are listed from the left. The display order of each language represents a display order of the options corresponding to each language displayed on the system language switching screen 72. The local notations represent language names of each language using the corresponding language. The option notation of each language is denoted by successively listing a "standard language notation of the corresponding language (5 characters from the leading end)", a "colon (:)", and a "local notation of the corresponding language (maximum 8 characters from the leading end)". For example, the option corresponding to "German" is "Germa/Deutsch."

Subsequently, each screen displayed on the display screen 5 during the system language switching will be described with reference to Figs. 5A to 5E. First, the system language switching screen 72 will be described with reference to Fig. 5A. Fig. 5A illustrates an example of the system language switching screen 72 in a case where the setup language set as the current system language is "English." The system language switching screen 72 has a title display area 81 representing the switching function of the system language and an option display area 82 for displaying a plurality of options of the system language.

In the title display area 81, as a title, the word "Language" representing the system language switching function is displayed in bold using the current setup language. In the title display area 81 shown in Fig. 5A, since the current setup language is "English," the word "Language" is displayed.

Meanwhile, in the option display area 82, the options corresponding to each language are displayed in one vertical line. In the leading end of the option display area 82, the option corresponding to the current setup language is hatched so that options corresponding to other languages are displayed thereunder. In the option display area 82 shown in Fig. 5A, the option corresponding to "English" as the current setup language is hatched in the leading end, and the option corresponding to "Spanish" having the highest display priority except for "English" is displayed thereunder. In the present embodiment, since the display screen 5 has a small size, a plurality of options is vertically scrollably displayed in the option display area 82. That is, if the cursor is moved downwardly, the options corresponding to languages other than "English" and "Spanish" (such as "French," "German," and "Italian") are displayed according to the display order. In the drawing, the cursor is positioned in the option corresponding to "Spanish." For example, if the current setup language is "Spanish," the option corresponding to "Spanish" is hatched in the leading end of the option display area 82, and the option corresponding to "English" having a highest priority except for "Spanish" is displayed thereunder. Further below, the options corresponding to languages other than "Spanish" and "English" are displayed according to the display order. In the present embodiment, it is possible to position and select the cursor in the option corresponding to the current setup language on the system language switching screen 72.

Next, the switching message screen 73 will be described with reference to Figs. 5B and 5C. Fig. 5B illustrates an exemplary switching message screen 73 in a case where the option corresponding to "Spanish" is selected from the options on the system language switching screen 72 in Fig. 5A. On the switching message screen 73, the "Language Name Represented by Selected Language (maximum 8 characters)" is displayed in bold and a large size on the second row of the screen, and the "Language Name Represented by Standard Language (Maximum 13 characters)" is displayed with a normal font and an medium size on the first row of the screen. In the drawing, the "Language Name Represented by Selected Language," that is, the word "Spanish" represented by Spanish is displayed at the second row of the screen, and the "Language Name Represented by Standard Language," that is, the word "Spanish" represented by English is displayed on the first row of the screen. In addition, the system language switching screen 72 is displayed for 0.75 seconds after selecting the option. As a result, manipulation for removing the switching message screen 73 becomes unnecessary.

Fig. 5C illustrates an exemplary switching message screen 73 in a case where the option corresponding to "English" is selected again from the options displayed on the system language switching screen 72 of Fig. 5A or in a case where the "Selection" key 13 is pressed on the query message screen 74 described below. That is, Fig. 5C illustrates the switching message screen 73 when manipulation is made to switch the system language to "English." On the switching message screen 73, the language name represented by the selected language, that is, the word "English" represented by English is displayed in bold and a large size on the second row of the screen. Meanwhile, on the switching message screen 73, the "Language Name Represented by Standard Language" to be displayed on the first row is omitted in order to avoid repetitive display with the second row.

Next, the query message screen 74 will be described with reference to Figs. 5D and 5E. Fig. 5D illustrates an exemplary query message screen 74 in a case where the shift key 16 and the [Language] key 14 are pressed on the normal edit screen 71 in which the current setup language is "Spanish," that is, in a case where manipulation is made to switch the system language from the currently set "Spanish" to the "standard language (English)." The message "Switch to English?" represented in the current setup language, that is, "Spanish," is displayed on the first and second rows on the query message screen 74, and the message "Switch to English?" represented by the "Standard Language (English)" is displayed on the third and fourth rows.

Fig. 5E illustrates an exemplary query message screen 74 in a case where the shift key 16 and the [Language] key 14 are pressed on the normal edit screen 71 in which the current setup language is "English," that is, in a case where manipulation is made to switch the system language from the currently set "English" to the "Standard Language (English)." On the query message screen 74, the message "Switch to English?" represented by the current setup language, that is, "English," is displayed on the first and second rows. Meanwhile, since the language before and after the switching is the same (English) on this query message screen 74, a message "Switch to English (Standard Language)?" represented by the "Standard Language (English)" to be displayed on the third and fourth rows is omitted in order to avoid repetitive display with the first and second rows.

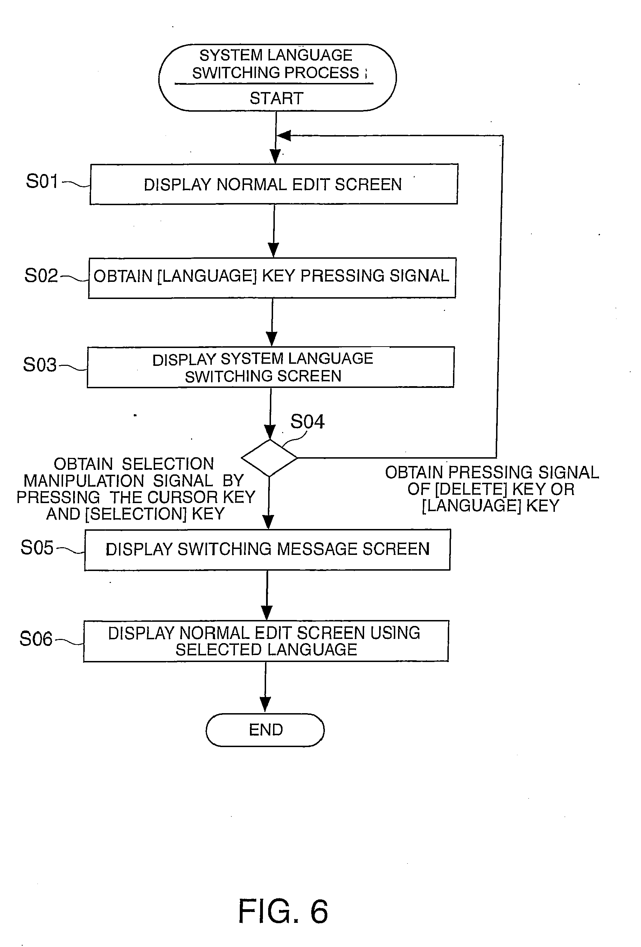

Subsequently, the system language switching process of the control unit 40 will be described with reference to Fig. 6. The control unit 40 (display control unit) performs control such that the normal edit screen 71 is displayed on the display screen 5 using the current setup language (S01), and, if the pressing signal of the [Language] key 14 is obtained (S02), the system language switching screen 72 is displayed on the display screen 5 with reference to the option corresponding to each language stored in the storage unit 64 (S03). In addition, if a selection manipulation signal of any one of the displayed options is obtained by pressing the cursor key 12 and the [Selection] key 13 (S04: obtain selection manipulation signal by pressing cursor key and [Selection] key), the switching is made to the display screen 5 with reference to the language names of the language selected from the language names stored in the storage unit 64 (selected language notations and standard language notations), and the message screen 73 is displayed for 0.75 seconds (S05). Then, the normal edit screen 71 is displayed on the display screen 5 using the selected language (S06). In this manner, the control unit 40 carries out the system language switching process.

Meanwhile, if the pressing signal of the [Delete] key 17 or the [Language] key 14 is obtained when the system language switching screen 72 is displayed (S04: obtain pressing signal of [Delete] key or [Language] key), the normal edit screen 71 is displayed again on the display screen 5 using the current setup language.

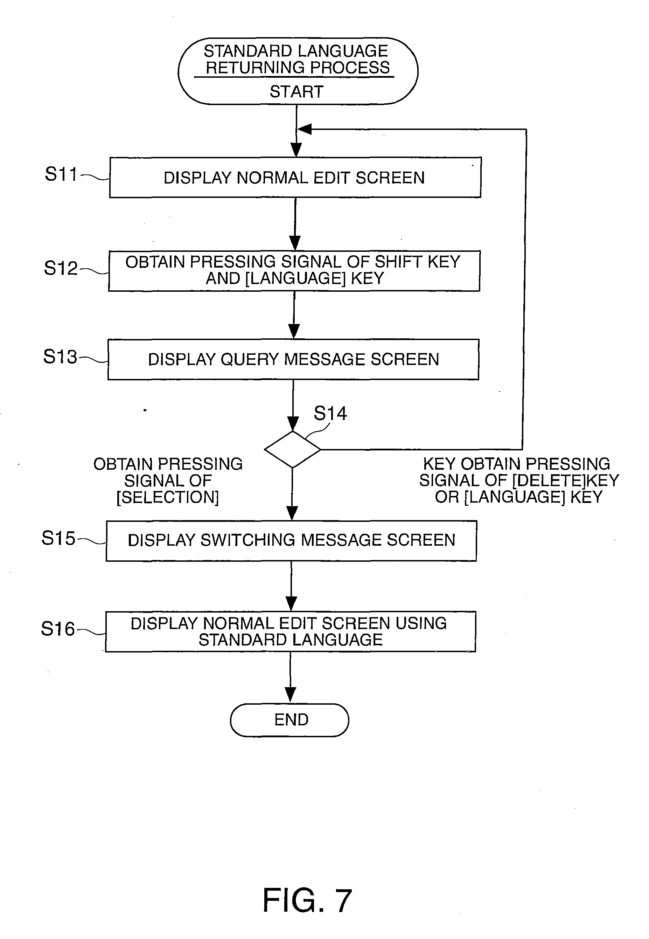

Next, a standard language returning process of the control unit 40 will be described with reference to Fig. 7. The control unit 40 (display control unit) performs control such that the normal edit screen 71 is displayed on the display screen 5 using the current setup language (S11), and, if the pressing signals of the shift key 16 and the [Language] key 14 are obtained (S12), the query message screen 74 is displayed on the display screen 5 with reference to the query message (setup language notation and standard language notation) stored in the storage unit 64 (S13). Then, if the pressing signal of the [Selection] key 13 is obtained (S14: obtain pressing signal of [Selection] key), the switching message screen 73 is displayed for 0.75 seconds with reference to the language name (standard language notation) of the standard language among the language names stored in the storage unit 64 (S15). Then, the normal edit screen 71 is displayed on the display screen 5 using the standard language (S16).

Meanwhile, if the pressing signal of the [Delete] key 17 or the [Language] key 14 is obtained when the query message screen 74 is displayed (S14: obtain pressing signal of [Delete] key or [Language] key), the normal edit screen 71 is displayed again on the display screen 5 using the current setup language.

In the tape print apparatus 1 described above, since the switching message screen 73 in which the language name of the selected language is displayed using the standard language and the selected language is displayed after manipulation is made to select the system language when the system language switching screen 72 is displayed, a user can recognize which language is selected by the user. Since the language name of the selected language is represented using the standard language even if an unfamiliar language is erroneously selected, a user can recognize what the selected language is. In addition, since the options of each language displayed on the system language switching screen 72 are displayed using both the standard language notation and the language notation of the option, a user can recognize what the language is using the language name represented using the standard language even if the language name is unfamiliar when a user selects a desired option. That is, the electronic apparatus according to the invention can reliably let a user know what language the system language is switched to or what language the system language can be switched during the system language switching manipulation.

In addition, for example, in a case where the system language is erroneously switched to an unfamiliar language by pressing the shift key 16 and the [Language] key 14 when the normal edit screen 71 is displayed, it is possible to readily and reliably switch the system language to the standard language. In addition, since the query message screen 74 is displayed to identify whether or not the system language is switched to the standard language, it is possible to prevent the system language from being erroneously switched to the standard language. In addition, a process of displaying the switching message screen 73 after the query message screen 74 is displayed may be omitted.

Although the present embodiment has been described by exemplifying the tape print apparatus 1 as the electronic apparatus, the invention may be applicable to other electronic apparatuses having the display screen. In addition, the standard language may be set to languages other than "English," or a function of changing the standard language by user's manipulation may be provided.

## Claims

1. An electronic apparatus comprising:
a display unit (5) configured to display a system language switching screen (72) for selecting a system language of the electronic apparatus (5) from a plurality of options displayed on the system language switching screen (72) and switching the system language;
a display control unit (40) configured to carry out display control of the display unit (5); and
a selection manipulation unit (12, 13) configured for selecting an arbitrary option from a plurality of the options displayed by the display unit (5),
wherein the display control unit (40) performs control of the display unit (5) such that a switching message screen (73) for notifying a fact that the system language is switched is displayed on the display unit (5) after manipulation is made to select an arbitrary option using the selection manipulation unit (12, 13), and
wherein the switching message screen (73) displays a language name of the system language represented using a system language corresponding to the selected arbitrary option and a language name of the system language represented using a predetermined system language.

2. The electronic apparatus according to claim 1, wherein
the display control unit (5) is configured to temporarily display the switching message screen (73) after manipulation is made to select an arbitrary option using the selection manipulation unit (12, 13).

3. The electronic apparatus according to claim 1 or 2, wherein
the display control unit (40) is configured to perform control of the display unit (5) such that each option displayed on the system language switching screen (72) is displayed using a language name represented using the respective system language corresponding to each displayed option and a language name represented using a predetermined language.

4. The electronic apparatus according to at least one of claims 1 to 3, further comprising
a predetermined language switching manipulation unit (14, 16) configured for switching the system language from a currently set system language to the predetermined language by pressing a manipulation key (14; 16) corresponding to a predetermined language,
wherein the display control unit (40) is configured to perform control of the display unit (5) such that a query message screen (74) for querying whether or not the system language shall be switched to the predetermined language is displayed by the display unit (5) after manipulation of the predetermined language switching manipulation unit (14, 16), and
wherein the query message screen (74) displays a query message represented using at least the currently set system language.

5. The electronic apparatus according to claim 4, wherein
the query message screen (74) displays a query message represented using the currently set system language and a query message represented using a predetermined language.

6. A method for controlling an electronic apparatus comprising a display unit (5) configured to display a system language switching screen (72) for selecting a system language of the electronic apparatus (5) from a plurality of options displayed on the system language switching screen (72) and switching the system language and a selection manipulation unit (12, 13) for selecting an arbitrary option from a plurality of the options displayed by the display unit (5),
the method comprising:
controlling the electronic apparatus (1) to display a language name of the system language represented using a system language corresponding to the selected arbitrary option and a language name of the system language represented using a predetermined language after manipulation is made to select an arbitrary option using the selection manipulation unit (12, 13); and
controlling the electronic apparatus to display on the display unit (5) a switching message screen (73) notifying the fact that the system language is switched.
